# EUROPÄISCHE PATENTSCHRIFT

(11) **EP 3 519 242 B1**
(45) Veröffentlichungstag und Bekanntmachung des Hinweises auf die Patenterteilung: **09.12.2020**
(21) Anmeldenummer: 17768405.7
(22) Anmeldetag: 08.09.2017
(51) Int. Cl.: B60L 15/20, B60W 10/26, B60W 50/02, B60L 58/16, B60L 3/12, B60W 50/00, B60W 50/029

(54) **VERFAHREN ZUM BETREIBEN EINES ENERGIEBORDNETZES EINES KRAFTFAHRZEUGS**
OPERATING METHOD FOR POWER NETWORK OF A VEHICLE
PROCÉDÉ DE FONCTIONNEMENT D'UN RÉSEAU DE BORD D'ÉNERGIE POUR UN VÉHICULE

(30) Priorität: 27.09.2016 DE 102016218555
(43) Veröffentlichungstag der Anmeldung: 07.08.2019
(73) Patentinhaber: Robert Bosch GmbH, 70442 Stuttgart (DE)
(72) Erfinder: SEEBICH, Hans-Peter, 1103 Budapest (HU); BAYSAL, Tuelin, 71732 Tamm (DE); RUEHLE, Armin, 71384 Weinstadt (DE); BARTHLOTT, Juergen, 75057 Kuernbach (DE); MUENZING, Patrick, 70734 Fellbach (DE); KOLLER, Oliver Dieter, 71384 Weinstadt (DE); BOHNE, Christian, 70437 Stuttgart (DE)
(86) Internationale Anmeldenummer: PCT/EP2017/072541
(87) Internationale Veröffentlichungsnummer: WO 2018/059907

(56) Entgegenhaltungen:
- EP-A2- 2 862 773
- WO-A1-2015/052921
- US-A1- 2016 137 185
- US-B1- 8 972 161

## Beschreibung

Die Erfindung betrifft ein Verfahren und eine Anordnung zum Betreiben eines Energiebordnetzes eines Kraftfahrzeugs.

### Stand der Technik

Ein Energiebordnetz eines Kraftfahrzeugs hat die Aufgabe, elektrische Verbraucher mit Energie zu versorgen. Fällt eine Energieversorgung aufgrund eines Fehlers oder einer Alterung mindestens einer Komponente des Energiebordnetzes aus, so entfallen wichtige Funktionen, wie bspw. die Servolenkung. Da die Lenkfähigkeit des Kraftfahrzeugs nicht beeinträchtigt, sondern nur schwergängig wird, ist der Ausfall des Energiebordnetzes bei heute in Serie befindlichen Kraftfahrzeugen allgemein akzeptiert.

Aufgrund einer zunehmenden Elektrifizierung von Aggregaten sowie einer Einführung von neuen Fahrfunktionen resultieren höhere Anforderungen an die Sicherheit und Zuverlässigkeit der elektrischen Energieversorgung im Kraftfahrzeug.

Bei einer zukünftigen hochautomatisierten Fahrfunktion, wie bspw. einem Autobahn-Piloten, werden dem Fahrer fahrfremde Tätigkeiten in begrenztem Maße erlaubt. Hieraus resultiert, dass bis zum Beenden der hochautomatisierten Fahrfunktion der menschliche Fahrer die Funktion als sensorische, regelungstechnische, mechanische und energetische Rückfallebene nur noch eingeschränkt wahrnehmen kann. Daher besitzt die elektrische Energieversorgung beim hochautomatisierten Fahren zur Gewährleistung der sensorischen, regelungstechnischen und aktuatorischen Rückfallebene eine im Kraftfahrzeug bisher nicht gekannte Sicherheitsrelevanz. Demnach müssen Fehler oder die Alterung im elektrischen Energiebordnetz im Sinne der Produktsicherheit zuverlässig und möglichst vollständig erkannt werden. Hierbei ist zu berücksichtigen, dass der Fahrer bei einem vollautomatisierten oder autonomen Fahren gänzlich als oben beschriebene Rückfallebene entfällt.

Zweikanalige Energiebordnetze sind u. a. in der Druckschrift WO 2015/135729 A1 oder in der Druckschrift DE 10 2011 011 800 A1 beschrieben.

Um einen Ausfall von Komponenten in einem Teilbordnetz prognostizieren zu können, sind Ansätze zur Überwachung einer technischen Zuverlässigkeit von Komponenten eines Energiebordnetzes eines Kraftfahrzeugs vorgesehen. Dabei werden die Komponenten betriebsbegleitend überwacht und deren Schädigung ermittelt, was in der Druckschrift DE 10 2013 203 661 A1 beschrieben ist.

Eine Überwachungsanordnung zum Überwachen eines Energiebordnetzes eines Kraftfahrzeugs ist aus der Druckschrift DE 10 2013 201 060 A1 bekannt. Das Energiebordnetz weist ein Hochspannungsbordnetz und ein Niederspannungsbordnetz auf, die über einen Gleichspannungswandler miteinander verbunden sind, wobei an das Niederspannungsbordnetz mehrere sicherheitskritische Verbraucher angeschlossen sind. Die Überwachungsanordnung weist ein Überwachungssteuergerät und als weitere Komponenten für jeden sicherheitskritischen Verbraucher einen zugeordneten Sensor zum Erfassen eines Werts eines elektrischen Betriebsparameters des Verbrauchers auf, wobei das Überwachungssteuergerät dazu ausgebildet ist, mindestens einen Verbraucher unter Berücksichtigung des erfassten Werts für den elektrischen Betriebsparameter zu überwachen. US8972161 B1 offenbart ein Verfahren zum Betreiben eines Energiebordnetzes eines Kraftfahrzeugs, wobei Werte von physikalischen Betriebsgrößen des Energiespeichers gespeichert werden, woraus eine bisherige Belastung des Energiespeichers ermittelt wird, aus dem die Belastbarkeit des Energiespeichers ermittelt wird.

### Offenbarung der Erfindung

Vor diesem Hintergrund werden ein Verfahren und eine Anordnung mit den Merkmalen der unabhängigen Patentansprüche vorgestellt. Ausgestaltungen des Verfahrens und der Anordnung ergeben sich aus der Beschreibung und den abhängigen Patentansprüchen.

Bei einer Durchführung des Verfahrens wird für ein Energiebordnetz eines Kraftfahrzeugs eine Überwachungseinheit für sämtliche Komponenten des Energiebordnetzes verwendet, mit der sämtliche Komponenten hinsichtlich ihres aktuellen und möglichen zukünftigen Zustands, bspw. unter Berücksichtigung eines Verschleißes und/oder einer Alterung, präventiv überwacht werden. Eine Prädiktion des zukünftigen Zustands kann auf diesen beiden Aspekten, d. h. dem Verschleiß und der Alterung basieren. Allerdings können alternativ oder ergänzend auch andere Aspekte berücksichtigt werden. Dabei wird mit der Überwachungseinheit als Komponente der vorgestellten Anordnung ein Powernet Condition Managment (PCM) bzw. eine Überwachung eines aktuellen Zustands und eine Prognose für den Verschleiß von Komponenten des Energiebordnetzes durchgeführt, mit der der Zustand des Energiebordnetzes auf einer Systemebene des Energiebordnetzes aber auch auf einer Komponentenebene für jede Komponente überwacht wird. Dabei ist eine derartige Überwachungseinheit für die Systemebene vorgesehen. Es ist möglich, für jede einzelne Komponente eine Prognose auf Komponentenebene und für das gesamte Energiebordnetz eine Prognose auf Systemebene durchzuführen, wobei eine Prognose auf Komponentenebene durch eine Prognose auf Systemebene plausibilisiert werden kann.

Die Überwachungseinheit umfasst als Module ein Diagnosemodul und ein Prognosemodul. Mit dem Diagnosemodul kann für jede Komponente als eine mögliche Zustandsanalyse eine Diagnose eines Ist-Zustands durchgeführt werden. Außerdem kann auch für das gesamte Energiebordnetz, üblicherweise unter umfassender Berücksichtigung sämtlicher Komponenten des Energiebordnetzes, als eine mögliche Zustandsanalyse eine Diagnose eines Ist-Zustands und somit des aktuellen Zustands durchgeführt werden. Mit dem Prognosemodul kann für jede Komponente als eine mögliche Zustandsanalyse eine Prognose eines zukünftigen Zustands durchgeführt werden. Außerdem kann auch für das gesamte Energiebordnetz, üblicherweise unter umfassender Berücksichtigung sämtlicher Komponenten des Energiebordnetzes, als eine mögliche Zustandsanalyse eine Prognose eines zukünftigen Zustands durchgeführt werden.

Mit dieser Überwachungseinheit wird unter Berücksichtigung mindestens einer Diagnose und/oder Prognose für mindestens eine Komponente und/oder mindestens einen Bordnetzkanal und/oder das gesamte Energiebordnetz in der Regel automatisch entschieden, ob eine Fahrfunktion, bspw. eine automatisierte Fahrfunktion, freigegeben werden darf oder unterbunden werden muss. Hierzu ist die Überwachungseinheit, die die Komponenten des Energiebordnetzes zusammenfassend und übergreifend überwacht, vorgesehen, mit der ein gesamter Zustand der Energieversorgung, die von mindestens einer physikalischen Betriebsgröße abhängig ist, durch das Energiebordnetz beurteilt wird, da einzelne Komponenten des Energiebordnetzes dies mangels Information über das gesamte Energiebordnetz im Allgemeinen nicht beurteilen können. In der Regel wird die Fahrfunktion durch mindestens eine Komponente des Energiebordnetzes unterstützt.

Bei Durchführung des Verfahrens übermitteln einzelne Komponenten des Energiebordnetzes aktuelle Werte mindestens einer in der Regel physikalischen Betriebsgröße, bspw. Strom, Spannung oder Temperatur, an die Überwachungseinheit. Anhand von Werten mindestens einer Betriebsgröße wird durch Zusammenführung einer Diagnose einzelner Komponenten sowie des gesamten Energiebordnetzes der aktuelle Zustand des Energiebordnetzes überwacht, wobei die Diagnose des Energiebordnetzes auf Systemebene einer Plausibilisierung der Diagnose der einzelnen Komponenten auf Komponentenebene dient. Außerdem können mit der Überwachungseinheit eine Analyse einer Zuverlässigkeit des gesamten Energiebordnetzes sowie einzelner Komponenten des Energiebordnetzes durchgeführt werden. Hierbei werden kritische Zustände der Energieversorgung abhängig von einer Topologie des Energiebordnetzes, abhängig von Ausfallursachen und/oder abhängig eines Betriebsmodus, der bspw. zur Durchführung eines jeweiligen Fahrbetriebs des Kraftfahrzeugs eingestellt wird, vorhergesagt. Dabei werden Werte der mindestens einen Betriebsgröße in Echtzeit erfasst und überwacht, womit eine Belastung der mindestens einen Komponente auf Basis einer Zustands- und Zuverlässigkeitsüberwachung ermittelt wird. Außerdem werden Werte einer Zustandsanalyse einzelner Komponenten, die bspw. auch Ausfallwahrscheinlichkeiten umfassen, an die Überwachungseinheit übermittelt und für eine Zustandsanalyse des gesamten Bordnetzes verwendet.

Mit dem Verfahren und der Anordnung ist es möglich, einen Zustand des Energiebordnetzes für ein Kraftfahrzeug zu überwachen und dabei zu prognostizieren und/oder zu diagnostizieren.

Mit der Anordnung kann der Zustand aller relevanten Komponenten des Kraftfahrzeugs gesamtheitlich überwacht werden (Status Monitoring). Dabei eignet sich die Anordnung aus Sicht der Produktsicherheit für sicherheitskritische neue Anwendungen, die z. B. ein automatisiertes Fahren betreffen. Hierbei ist es u. a. möglich, dass Verschleißausfälle als Fehler von Komponenten, die üblicherweise eine Ursache für fehlerhafte Zustände des Energiebordnetzes im Kraftfahrzeug sowie im Kontext neuer Anwendungsbereiche sicherheitsrelevant sind, präventiv identifiziert werden. Außerdem können Gegenmaßnahmen zum Beheben derartiger Fehler eingeleitet werden. Dies betrifft u. a. eine fortschreitende Alterung bzw. einen fortschreitenden Alterungsmechanismus einer derartigen Komponente. Um zu beurteilen, wie kritisch diese Alterung jeweils ist, wird mit einem Algorithmus eine Bedeutung der Komponente im gesamten Energiebordnetz und/oder Kraftfahrzeug berücksichtigt.

Abhängig von einem Ergebnis, das die Überwachung mindestens einer Komponente des Energiebordnetzes liefert, wird in Ausgestaltung eine Entscheidung über eine Freigabe der bspw. automatisierten Fahrfunktion unterstützt. Hierbei werden Alterungseffekte von mindestens einer Komponente im Energiebordnetz berücksichtigt, die zumindest für eine derartige Fahrfunktion wichtig sind. Je nach Alterung als möglichen Zustand einer derartigen Komponente kann die Freigabe der Fahrfunktion unterbunden und/oder entzogen werden. Falls die Fahrfunktion momentan durchgeführt wird und ein sicherheitsrelevanter Zustand der mindestens einen Komponente erfasst wird, kann veranlasst werden, dass die Fahrfunktion beendet und verlassen werden muss. Dies betrifft bspw. auch ein Segeln als Betriebsmodus des Kraftfahrzeugs zum Durchführen einer automatisierten Fahrfunktion des Kraftfahrzeugs und/oder als automatisierte Fahrfunktion des Kraftfahrzeugs, wodurch wiederum sicherheitskritische Zustände des Kraftfahrzeugs vermeidbar sind.

In Ausgestaltung werden präventiv Fahrstrategien angewandt, durch die Fahrsituationen vermieden werden, die zu einer starken Alterung der mindestens einen Komponente des Energiebordnetzes führen, wodurch eine Zuverlässigkeit des Energiebordnetzes erhöht wird.

Das Verfahren umfasst auch eine Durchführung von mindestens einer präventiven Wartungsmaßnahme für die mindestens eine Komponente, die z. B. in einem regulären Wartungsintervall durchführbar ist, wodurch eine Verfügbarkeit der mindestens einen Komponente erhöht wird. Durch frühzeitiges Warnen vor einem drohenden kritischen Zustand des Energiebordnetzes, üblicherweise bei Durchführung einer Fahrfunktion, bspw. bei einem automatisierten Fahrbetrieb, kann ein Wechsel und/oder eine Übergabe einer Kontrolle des Kraftfahrzeugs in eine für den Fahrer leichter beherrschbare Fahrfunktion in einem manuellen Fahrbetrieb durchgeführt werden.

Im Rahmen des Verfahrens ist es ebenfalls möglich, das Kraftfahrzeug auch bei Ausfall von Komponenten des Energiebordnetzes automatisch und ohne Eingriff des Fahrers aus einem automatisierten Fahrbetrieb in einen sicheren Zustand zu bringen und somit eine zwingende Sicherheitsmaßnahme durchzuführen. Dies betrifft ebenso die Maßnahme, eine Freigabe der Fahrfunktion zu unterbinden, falls mit der Überwachungseinheit für das Energiebordnetz ein kritischer Zustand, bspw. aufgrund eines Verschleißes der mindestens einen Komponente des Energiebordnetzes mit hoher Wichtigkeit für das Kraftfahrzeug, prognostiziert werden sollte. Somit kann vor dem kritischen Zustand frühzeitig gewarnt werden, wobei sich ein Zeitgewinn bei der Einleitung einer Rückfallstrategie ergibt.

Durch frühzeitiges Erkennen von anstehenden und/oder sich anbahnenden Ausfällen als kritische Zustände können auch im manuellen, nicht-automatisierten Fahrbetrieb die Zuverlässigkeit und die Sicherheit des Kraftfahrzeugs erhöht werden, wodurch auch ein Liegenbleiben, bspw. auf einer Fahrspur einer Autobahn, vermieden werden kann.

Mit dem Verfahren kann eine Durchführung eines zukünftigen automatisierten und auch autonomen Fahrbetriebs und somit einer entsprechenden Fahrfunktion des Kraftfahrzeugs kontrolliert und/oder unterstützt werden, wobei berücksichtigt wird, dass der Fahrer bei einem derartigen Fahrbetrieb nicht mehr als sensorische, regelungstechnische, mechanische und energetische Rückfallebene zur Verfügung steht oder stehen muss, da nunmehr das Kraftfahrzeug Funktionen des Fahrers, wie bspw. eine Umgebungserkennung, eine Trajektorien-Planung und eine Trajektorien-Umsetzung, die bspw. auch das Lenken und Bremsen umfasst, übernimmt.

Dabei wird in Ausgestaltung überwacht, ob sich das Energiebordnetz in einem einwandfreien Zustand befindet und diesen auch in naher Zukunft aufweist. Dies bedeutet ebenso, dass eine automatisierte und/oder autonome Fahrfunktion dem Fahrer bzw. Nutzer nur dann zur Verfügung steht, wenn durch die Überwachungseinheit nachgewiesen wird, dass sämtliche hierfür notwendigen Komponenten in Ordnung sind und eine erforderliche Energieversorgung gesichert ist. Ein möglicher Ausfall der Energieversorgung der Komponenten ist mit der Überwachungseinheit prognostizierbar, wobei auch Gegenmaßnahmen ergriffen werden, bevor eine automatisierte Fahrfunktion nicht mehr kontrollierbar ist, da automatische Funktionen zu Umgebungserkennung, Trajektorienplanung und - umsetzung nicht mehr zur Verfügung stehen. Durch Nutzung der Überwachungseinheit können die aus Sicht der Produktsicherheit sehr hohen Anforderungen an das Energiebordnetz des Kraftfahrzeugs gewährleistet werden.

In Ausgestaltung werden mit der Überwachungseinheit eine Belastung und/oder eine Belastbarkeit von Komponenten des Energiebordnetzes ermittelt, wobei die Belastung im laufenden Betrieb in Echtzeit ermittelt wird. Belastbarkeitsmodelle für die Komponenten werden im Voraus, bspw. in Versuchen, für bestimmte Rahmenbedingungen ermittelt. Die Belastung wird auf die Rahmenbedingungen der Belastbarkeit umgerechnet. Durch eine Gegenüberstellung der Belastung und der Belastbarkeit können Aussagen über eine aktuelle Ausfallwahrscheinlichkeit und die Prognose des Ausfalls getroffen werden, wobei diese Prognose mit einer maximal zulässigen Ausfallwahrscheinlichkeit verglichen wird. Die Belastbarkeitsmodelle sind in der Überwachungseinheit (PCM) üblicherweise komponentenabhängig hinterlegt. Falls es im laufenden Betrieb zu Ausfällen von mindestens einer Komponente kommen sollte, was mit der Überwachungseinheit vermieden wird, kann durch Auswertung mehrerer Ausfälle derselben baugleichen Komponenten Belastbarkeitsmodelle angepasst und/oder generiert werden. Aus der Belastbarkeit wird auf einen zukünftigen Zustand des Energiebordnetzes geschlossen.

Weiterhin ist es möglich, den Zustand des Energiebordnetzes zu überwachen und ein Ergebnis an ein Steuergerät des Kraftfahrzeugs zu übermitteln, wobei ggf. sicherheitsrelevante automatisierte Fahrfunktionen verboten werden können. Hinsichtlich einer Freigabe oder eines Verbots automatisierter Fahrfunktionen wird zwischen verschiedenen Betriebsmodi, bspw. Rekuperation oder Segeln, unterschieden, da sich abhängig vom Betriebsmodus und somit für eine jeweilige automatisierte Fahrfunktion im Energiebordnetz allgemein Strukturen und somit auch unterschiedliche Strukturen ergeben, wobei mindestens eine derartige Struktur optional auch als Redundanzstruktur ausgebildet sein kann. Beim Segeln kann dies einen Wegfall eines Generators als Redundanz zu einer Batterie betreffen. Sofern für eine Komponente bspw. eine Alterung und/oder ein Verschleiß identifiziert wird bzw. werden, wird im Rahmen einer Wichtigkeits- bzw. Importanzanalyse zumindest deren Relevanz für das Energiebordnetz, in der Regel für das gesamte Kraftfahrzeug als Systemebene berücksichtigt. Eine Wichtigkeit einer Komponente hängt von einer Topologie des Energiebordnetzes, das einkanalig oder mehrkanalig ausgebildet sein und eine zusätzliche Batterie aufweisen kann oder nicht, ab. Dabei ist die Topologie des im Kraftfahrzeug verbauten Energiebordnetzes in der Regel nach dessen Herstellung festgelegt. Die Struktur des Energiebordnetzes wird während der Entwicklung des Energiebordnetzes mindestens einmal oder lediglich einmal analysiert, wobei ggfs. Betriebsmodi und Ausfallursachen berücksichtigt werden. Die Struktur wird dann als mindestens ein Algorithmus in der Überwachungseinheit hinterlegt. Dabei können auch verschiedene Algorithmen berücksichtigt werden, wobei jeweils ein Algorithmus für die Struktur von einem Betriebsmodus und/oder einer Ausfallursache abhängig ist. Je nach Kraftahrzeug können sich abhängig von einer Klasse und einem Funktionsumfang des Kraftfahrzeugs verschiedene Topologien ergeben, die alle im Rahmen des beschriebenen Verfahrens überwacht werden können. Weiterhin kann die Wichtigkeit der Komponente auch von einem Betriebsmodus des Kraftfahrzeugs abhängig sein.

Die Ermittlung des Zustands des Energiebordnetzes mit der Überwachungseinheit umfasst eine systemische Diagnose als Zustandsanalyse auf Basis der Werte der physikalischen Betriebsgrößen als Eingangsgrößen, auf deren Grundlage ein Ist-Zustand des Energiebordnetzes analysiert wird, und eine Prognose zum Prognostizieren des zukünftigen Zustands des Energiebordnetzes auf Basis von Belastungen, denen die einzelnen Komponenten bei einem bisherigen Betrieb im Feld ausgesetzt waren, woraus eine mögliche Belastbarkeit resultiert. Dabei resultieren Informationen über die Belastbarkeit der Komponenten aus einer Entwicklung der Komponenten und hängt von einer Art der verwendeten Komponenten, einer Verschaltung der Komponenten sowie von Betriebsparametern der Komponenten, bspw. einer Fähigkeit einer Abführung von Wärme, ab. Ein Einsatz einer Komponente hat in der Regel keinen Einfluss auf die Belastbarkeit. Die Belastung der Komponente resultiert aus deren Einsatz im Kraftahrzeug. Aus der Belastung und der Belastbarkeit werden Kenngrößen für eine Zuverlässigkeit von mindestens einer Komponente, z. B. eine momentane Ausfallwahrscheinlichkeit der Komponente und eine Prognose des Ausfalls der Komponente ermittelt. Im Rahmen des Verfahrens ist es vorgesehen, die mindestens eine Komponente im laufenden Betrieb sensorisch zu überwachen und anhand von Werten der mindestens einen Betriebsgröße deren aktuellen Ist-Zustand zu diagnostizieren. Eine bisherige gesamte Belastung der mindestens einen Komponente kann ebenfalls aus Werten dieser Betriebsparameter, die über einen längeren Zeitraum, bspw. während des gesamten bisherigen Betriebs der mindestens einen Komponente, ermittelt und gesammelt werden, bestimmt werden. Eine aktuelle Belastung der mindestens einen Komponente kann aus aktuellen Werten dieser Betriebsparameter ermittelt werden. Werte der Betriebsgrößen werden der Überwachungseinheit mit Sensoren, die den Komponenten zugeordnet sind, bereitgestellt. Dabei wird die Belastung auf Grundlage von Werten der mindestens einen physikalischen Betriebsgröße, die sich bisher im Betrieb der mindestens einen Komponente ergeben hat, ermittelt. Aus belastungsrelevanten Betriebsgrößen und einer bisherigen Belastung in Kombination mit der Belastbarkeit wird als mindestens eine Zuverlässigkeitskenngröße der mindestens einen Komponente bspw. deren Ausfallwahrscheinlichkeit berechnet.

Außerdem ist es bei einer Durchführung des Verfahrens möglich, den Zustand der Komponenten des Energiebordnetzes mit einer zentralen Datenbanken abzugleichen und ggf. daraus Entscheidungen darüber zu treffen, ob durch Abschalten oder Degradieren von Verbrauchern als Komponenten des Energiebordnetzes elektrische Lasten reduziert werden oder ob bestimmte Betriebsmodi vermieden werden, wodurch ein Betrieb der Komponenten des Energiebordnetzes optimiert werden kann. Hierbei ist es möglich, dass ein Zustand eines Energiebordnetzes eines ersten Kraftfahrzeugs mit Zuständen von Energiebordnetzen anderer Kraftfahrzeuge verglichen werden, wobei eine Abweichung des Zustands des Kraftfahrzeugs, z. B. aufgrund eines Fehlers der mindestens einen Komponente des Energiebordnetzes, ggf. des kompletten Energiebordnetzes durch Vergleich mit Zuständen von Energiebordnetzen der anderen Fahrzeugen identifiziert und behoben werden können. So kann z. B. ein Fehler in einer Komponente zu übermäßiger Beanspruchung anderer Komponente führen, die erkannt und behoben werden kann.

Weiterhin können Felddaten erfasst werden, die zur Ausgestaltung und/oder Auslegung zukünftiger Komponenten berücksichtigt werden können.

Bei einer Ausgestaltung der Anordnung werden physikalische und/oder systemische Diagnosen der einzelnen Komponenten in der Überwachungseinheit und somit an zentraler Stelle zusammengeführt. Dabei ist es auch möglich, das Verfahren softwaregestützt durchzuführen, da die Überwachungseinheit mindestens eine Recheneinheit aufweist oder als eine Recheneinheit zur Überwachung der Komponenten des Energiebordnetzes ausgebildet ist. Dabei ist es denkbar, dass eine Fahrfunktion verboten und demnach nicht freigegeben wird, obwohl ein aufgrund der als Diagnose ausgebildeten Zustandsanalyse ermittelter aktueller Ist-Zustand des Energiebordnetzes zwar in Ordnung sein kann, aber aufgrund der ebenfalls durchgeführten, als Prognose ausgebildeten Zustandsanalyse ein zukünftiger kritischer Zustand prognostiziert wird.

Mögliche Fehler und/oder eine mögliche Alterung von Komponenten des Energiebordnetzes wird bzw. werden mit dem Verfahren erkannt, wobei vorgesehen sein kann, dass ein Betriebsmodus zum Durchführen einer Fahrfunktion beendet oder gesperrt und ein Übergang in einen sicheren Betriebsmodus veranlasst wird, wobei eine Kontrolle der Fahrfunktion an den Fahrer übergeben werden kann, was unter Berücksichtigung der Prognose über den zukünftigen kritischen Zustand auch dann möglich ist, obwohl eine einzelne Komponente auch unter Berücksichtigung der Diagnose keinen Fehler oder keine Alterung meldet. In Ausgestaltung wird eine Zustandsanalyse, die mehrere Komponenten umfasst und somit ggf. für das gesamte Energiebordnetz durchgeführt wird, höher als eine Zustandsanalyse für lediglich eine Komponente oder wenige Komponenten eingestuft. Außerdem wird eine Fahrfunktion abhängig von einem Betriebsmodus, einer Ausfallursache und/oder einer Topologie des Energiebordnetzes jeweils spezifisch freigegeben. In Ausgestaltung wird berücksichtigt, welche Komponenten eine jeweilige Fahrfunktion unterstützen und somit für deren Durchführung erforderlich sind. Eine Entscheidung über eine Freigabe einer Fahrfunktion kann für jede Fahrfunktion, in Ausgestaltung für eine automatisierte Fahrfunktion getroffen werden. Eine Fahrfunktion kann z. B. als Segelbetrieb bei einer manuellen Fahrt aber auch als Segelbetrieb bei einer automatisierten Fahrt ausgebildet sein.

Eine Zustandsanalyse, bei der mehrere Komponenten gemeinsam berücksichtigt werden, kann dazu verwendet werden, eine Zustandsanalyse, bei der eine geringere Anzahl an Komponenten gemeinsam berücksichtigt wird, zu plausibilisieren. Hierbei wird plausibilisiert, ob Ergebnisse einer Zustandsanalyse, die Komponenten an ein übergeordnetes Steuergerät und/oder die Überwachungseinheit melden, zu Ergebnissen einer Zustandsanalyse, die aus einer systembezogenen Betrachtung des kompletten Energiebordnetzes resultieren, passen. Das Energiebordnetz kann dabei u. a. über Knoten- und Maschenregeln abgebildet werden, wodurch etwaige Unplausibilitäten erkannt werden können.

Üblicherweise kann ein Energiebordnetz Komponenten lediglich eines Herstellers oder von unterschiedlichen Herstellern aufweisen. Dabei kann eine Komponente eines ersten Herstellers durch eine Komponente eines anderen Herstellers ergänzt und/oder ersetzt werden. Dabei ist es möglich, dass für eine derartige fremde Komponente kein Belastbarkeitsmodell und/oder Alterungsmodell vorliegt, was bspw. dann der Fall sein kann, wenn diese Komponente nicht speziell für einen Einsatz in einem Kraftfahrzeug vorgesehen ist. Allerdings kann auch diese Komponente bei einer Ausführungsform des Verfahrens überwacht und ihr Zustand diagnostiziert sowie auch der zukünftige Zustand prognostiziert werden. Falls das Energiebordnetz aus Komponenten verschiedener Hersteller besteht, ist es vorgesehen, dass in der Überwachungseinheit verschiedene Belastbarkeitsmodelle der jeweiligen Hersteller implementiert werden können. Denkbar ist es z. B., dass in jeder Komponente das Belastbarkeitsmodell und die benötigten Informationen zur Umrechnung der Belastung auf die Rahmenbedingungen, bei der das Belastbarkeitsmodell vorliegt, gespeichert sind und beim Einsatz im Kraftfahrzeug in die Überwachungseinheit automatisch eingelesen werden. Ein Belastbarkeitsmodell kann anhand von Versuchen ermittelt werden. Üblicherweise werden in einem hoch- und/oder vollautomatisierten Kraftfahrzeug nur Komponenten eingesetzt, für die Belastbarkeitsmodelle vorliegen.

Durch Kommunikation mit der zentralen Datenbank können cloudbasierte Änderungen eines Betriebsmodus bzw. einer Betriebsstrategie durch Austausch von Daten mit der Datenbank über das Internet abgeleitet werden, um Ausfälle des Energiebordnetzes zu verringern. Weiterhin können Kenntnisse über eine Belastbarkeit von Komponenten anderer Hersteller über das Internet ermittelt werden. Falls fremde Komponenten anderer Hersteller im Energiebordnetz eingesetzt werden, werden etwaige Belastbarkeitsmodelle und/oder Alterungsmodelle von der Überwachungseinheit eingelesen. Außerdem kann durch Erfassung von Felddaten eine Entwicklung der Komponenten verbessert werden, wobei durch Erfassung der Felddaten aufgrund einer großen Anzahl an Komponenten, die im Feld überwacht werden, Belastbarkeitsmodelle, z. B. durch Deep-Learning, verbessert werden können. Es ist ebenfalls möglich, dass bekannte Belastbarkeitsmodelle unter Berücksichtigung bekannter, realer Belastungen der Komponenten angepasst und/oder aktualisiert werden.

Das Verfahren kann für jedes Kraftfahrzeug eingesetzt werden, bei dem eine Freigabe bestimmter Fahrfunktionen in Abhängigkeit einer bisherigen Belastung, Beanspruchung und/oder Alterung von Komponenten des Energiebordnetzes und des aktuellen Zustands der Komponenten erteilt werden soll. Dabei kann das Verfahren bei jedem Kraftfahrzeug zum Einsatz kommen, dessen Energiebordnetz eine hohe Sicherheitsrelevanz aufweist, das betrifft bspw. ein Kraftfahrzeug, mit dem ein Segelbetrieb oder eine Rekuperation durchgeführt werden kann, und/oder ein automatisiertes Kraftfahrzeug zur Durchführung eines hochautomatisierten, vollautomatisierten oder autonomen Fahrbetriebs. Bei Durchführung einer automatisierten Fahrfunktion werden Module, bspw. ein Motor, ein Antriebsaggregats, eine Lenkung, eine Bremse und/oder eine elektrische Bremskraftverstärkung des Kraftfahrzeugs, durch die in dem jeweiligen Fahrbetrieb eine Trajektorie des Kraftfahrzeugs beeinflusst wird, automatisch kontrolliert und somit gesteuert und/oder geregelt. Zumindest einige Schritte des vorgestellten Verfahrens können von der Überwachungseinheit und/oder dem Steuergerät softwaregestützt durchgeführt werden. Hierzu ist es auch möglich, Software zur Durchführung in ein bestehendes Steuergerät oder eine bestehende Komponente des Energiebordnetzes, bspw. ein Koppelelement zwischen Kanälen des Energiebordnetzes, zu integrieren.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Figur 1 zeigt in schematischer Darstellung ein Beispiel für ein Energiebordnetz eines Kraftfahrzeugs für das mit einer Ausführungsform der erfindungsgemäßen Anordnung eine Ausführungsform des erfindungsgemäßen Verfahrens durchführbar ist.
Figur 2 zeigt in schematischer Darstellung die Ausführungsform der erfindungsgemäßen Anordnung.
Figur 3 zeigt ein Diagramm zu einer Ausführungsform des erfindungsgemäßen Verfahrens mit der Ausführungsform der erfindungsgemäßen Anordnung aus Figur 2.
Figur 4 zeigt Details zu Betriebsmodi, die im Rahmen der Ausführungsform des Verfahrens mit dem Energiebordnetz realisierbar sind.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleichen Komponenten sind dieselben Bezugsziffern zugeordnet.

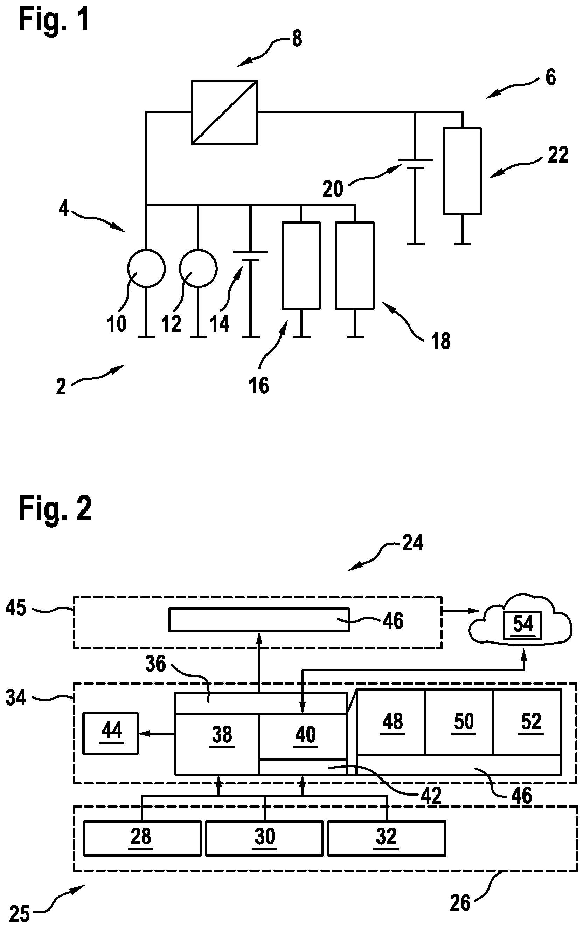

Das in Figur 1 schematisch dargestellte Beispiel des Energiebordnetzes 2 für ein Kraftfahrzeug umfasst einen ersten Kanal 4, der auch als Basisbordnetz bezeichnet wird, sowie einen zweiten Kanal 6. Beide Kanäle 4, 6 sind hier über einen Gleichstromwandler 8 miteinander verbunden. Der erste Kanal 4 des Energiebordnetzes 2 umfasst als Komponenten einen Starter 10, einen Generator 12, eine erste Batterie 14, mindestens einen nicht sicherheitsrelevanten Verbraucher 16, sowie mindestens einen ersten sicherheitsrelevanten Verbraucher 18. Der zweite Kanal 6 umfasst eine zweite Batterie 20 sowie mindestens einen zweiten sicherheitsrelevanten Verbraucher 22 als Komponenten. Dabei kann mindestens eine Funktion, die von dem mindestens einen ersten sicherheitsrelevanten Verbraucher 18 ausgeführt wird, redundant von dem mindestens einen zweiten sicherheitsrelevanten Verbraucher 22 ausgeführt werden. Die sicherheitsrelevanten Verbraucher 18, 22 können auch als sicherheitskritische Verbraucher bezeichnet werden.

Es ist vorgesehen, dass beide Kanäle 4, 6 hier als eine Betriebsgröße eine elektrische Spannung aufweisen, wobei Werte für diese Spannung für beide Kanäle 4, 6 hier identisch sind und bspw. jeweils 12 Volt betragen. Durch Vorsehen der beiden Kanäle 4, 6 ist dieses Energiebordnetz 2 redundant aufgebaut. Mit den genannten Komponenten des Energiebordnetzes 2 ist es möglich, Funktionen für ein automatisiertes Fahren des Kraftfahrzeugs zu realisieren. Es ist jedoch auch denkbar, dass die beiden Kanäle 4, 6 unterschiedliche Spannungen aufweisen.

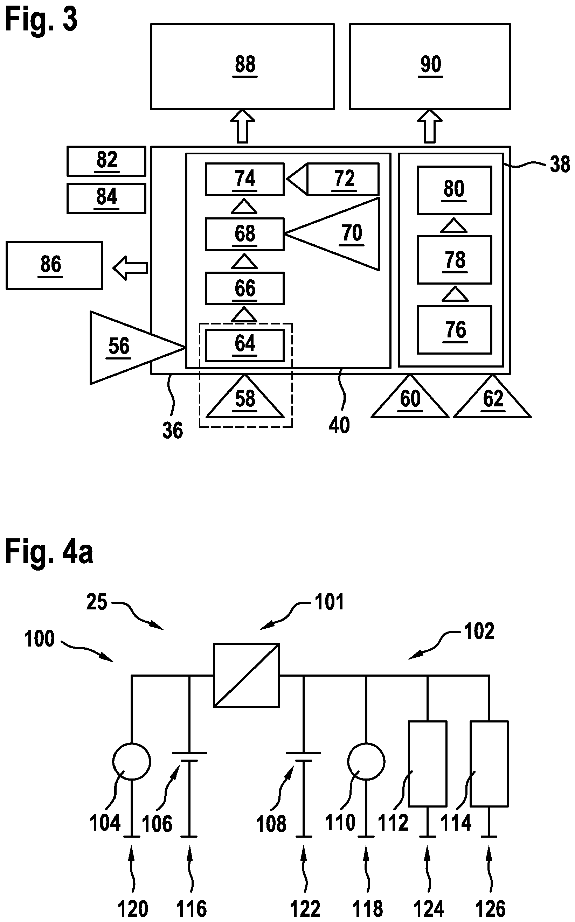

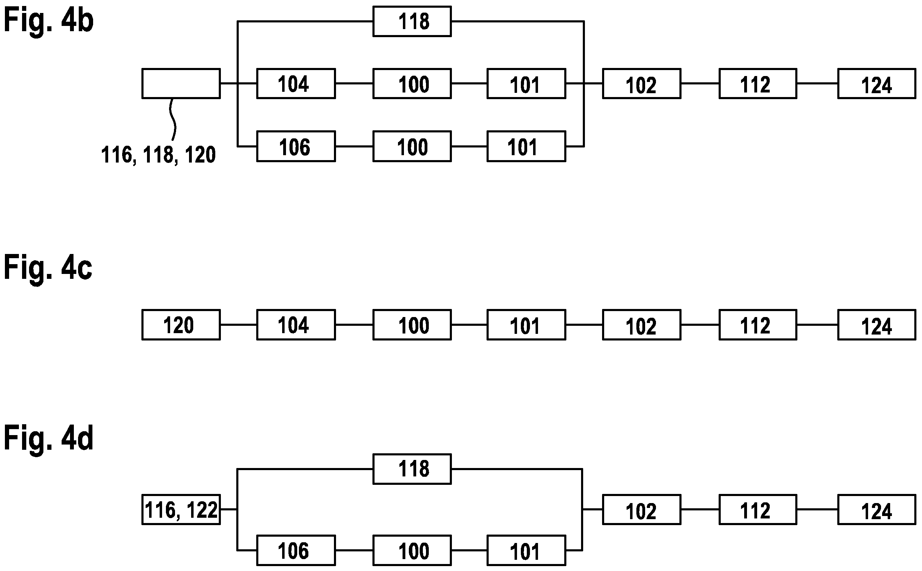

Die anhand von Figur 2 schematisch dargestellte Ausführungsform der erfindungsgemäßen Anordnung 24 umfasst ein Energiebordnetz 25 für ein Kraftfahrzeug, wobei dieses Energiebordnetz 25 u. a. mehrere Verbraucher als Komponenten 28, 30, 32 umfasst. Details zu diesem Energiebordnetz 25 gehen aus Figur 4 hervor. Dabei bilden diese Komponenten 28, 30, 32 eine Komponentenebene 26 des Energiebordnetzes 25. Dem Energiebordnetz 25 ist auf einer Systemebene 34 eine Überwachungseinheit 36 zugeordnet, die als Komponenten ein als Diagnosemodul 38 ausgebildetes Modul zum Durchführen einer hier systemischen Diagnose als Zustandsanalyse, ein als Prognosemodul 40 ausgebildetes Modul zum Durchführen einer Prognose als Zustandsanalyse sowie ein als Belastbarkeitsmodul 42 ausgebildetes Modul, in dem Belastbarkeitsmodelle hinterlegt sind oder z. B. durch Einlesen hinterlegt werden. Das Prognosemodul dient einer Ermittlung einer Belastung der Komponenten 28, 30, 32 unter Berücksichtigung der Belastbarkeitsmodelle aus dem Belastbarkeitsmodul 42, wobei Kenngrößen für eine Zuverlässigkeit der Komponenten 28, 30, 32 ermittelt werden. Diese Zuverlässigkeitskenngrößen werden von dem Prognosemodul 40 zur Analyse und Prognose des Zustands des Energiebordnetzes 2, 25 verwendet. Dabei umfasst das Belastbarkeitsmodul 42 die Belastbarkeitsmodelle der Komponenten des Energiebordnetzes 28, 30, 32. Weiterhin umfasst die Systemebene 34 ein als Energiemanagementmodul 44 ausgebildetes Modul, das der Überwachungseinheit 36 sowie mit den Komponenten 28, 30, 32 verbunden ist. Außerdem umfasst eine Fahrzeugebene 45 des Kraftfahrzeugs ein Steuergerät 46.

Bei einer Ausführungsform des Verfahrens mit der Anordnung 24, die zumindest die Überwachungseinheit 36 aufweist, werden der Überwachungseinheit 36 von den Komponenten 28, 30, 32 des Energiebordnetzes 25 Werte von physikalischen Betriebsgrößen, bspw. von physikalischen Zustandsgrößen, der Komponenten 28, 30, 32 bereitgestellt, die von Sensoren betriebsbegleitend ermittelt werden. Außerdem kann jede Komponente 28, 30, 32 der Überwachungseinheit 36 Informationen über ihren Zustand übermitteln, derartige Informationen werden durch Werte der physikalischen Zustandsgrößen, die im Energiebordnetzes 25 an wichtigen Stellen gemessen werden, ergänzt. Außerdem werden der Überwachungseinheit 36 auch Informationen zu einer bisherigen Belastung, die auf bisher ermittelten Werten der physikalischen Betriebsgrößen beruhen, mindestens einer jeweiligen Komponente 28, 30, 32 bereitgestellt. Auf Grundlage dessen werden mit der Überwachungseinheit 36 Entscheidungen hinsichtlich eines Betriebsmodus, einer Ausfallursache einer Komponente 28, 30, 32 sowie einer topologiespezifischen Freigabe für eine automatisierte Fahrfunktion getroffen. Für jede Ausfallursache und jeden mit dem Kraftfahrzeug möglichen Betriebsmodus werden für die im Kraftfahrzeug verbaute Topologie Freigaben und Verlassensaufforderungen für Betriebsmodi und ggfs. weitere Funktionen, z. B. eine Prognose für einen Tausch einer Komponente und eine Planung für einen nächsten regelmäßigen Werkstattbesuch, z. B. für eine Hauptuntersuchung (HU), bereitgestellt.

Hier sind eine Normalfahrt 48, eine Rekuperation 50 sowie ein Segelbetrieb 52 als Betriebsmodi und/oder Fahrfunktionen des Kraftfahrzeugs beispielhaft angegeben. Dabei kann der Segelbetrieb 52 bei einer automatisierten Fahrt durchgeführt werden. Abhängig von einem Zustand mindestens einer Komponente 28, 30, 32 und/oder des gesamten Energiebordnetzes 25 wird mit der Überwachungseinheit 36 entschieden, ob eine automatisierte Fahrfunktion des Kraftfahrzeugs freigegeben werden darf oder unterbunden werden muss, oder ob ein jeweiliger Betriebsmodus verlassen werden muss oder weiter durchgeführt werden kann. Eine jeweilige Information hierüber wird dem Steuergerät 46 des Kraftfahrzeugs bereitgestellt. Weiterhin ist hier vorgesehen, dass Informationen, die bei der Ausführungsform des Verfahrens erfasst werden, per Funk über das Internet an eine zentrale, ortsfeste Einheit 54 übermittelt werden, wobei diese Einheit 54 als Datenbank und/oder Werkstatt ausgebildet sein kann. Hierbei ist auch vorgesehen, dass die zentrale Einheit 54 mit der Überwachungseinheit 36 Informationen austauscht.

Das Diagramm aus Figur 3, das in Verbindung mit Figur 2 erläutert wird, zeigt eine mögliche Aufteilung sowie einen Fluss von Informationen in der Überwachungseinheit 36 bei Durchführung einer Ausführungsform des erfindungsgemäßen Verfahrens. Hierbei werden von der Überwachungseinheit 36 mit dem Prognosemodul 40 eine Prognose und mit dem Diagnosemodul 38 eine Diagnose durchgeführt. Dabei werden dem Prognosemodul 40 über eine Schnittstelle 56 externe Belastbarkeitsmodelle für die Komponenten 28, 30, 32 bereitgestellt. Alternativ oder ergänzend ist es möglich, dass die Belastbarkeitsmodelle im Prognosemodul 40 hinterlegt sind. Es ist ebenso denkbar, dass jede Komponente 28, 30, 32 eine Identifikationsnummer trägt, mit der ein zugehöriges Belastbarkeitsmodelle aus dem Internet bezogen werden kann.

Weiterhin ist eine erste Eingabe 58 vorgesehen, über die der Überwachungseinheit 36, hier dem Prognosemodul 40, Belastungsdaten der Komponenten 28, 30, 32 während eines laufenden Betriebs des Energiebordnetzes 25 bereitgestellt werden. Die Belastungsdaten werden aus zeitabhängigen Verläufen von physikalischen Zustandsgrößen, bspw. dem Strom, der Spannung und der Temperatur abgeleitet. Zum Ermitteln derartiger Verläufe werden Werte der physikalischen Zustandsgrößen betriebsbegleitend gesammelt. Dem Diagnosemodul 38 werden von den Komponenten 28, 30, 32 über eine zweite Eingabe 60 Informationen zu möglichen Fehlern von Komponenten 28, 30, 32 bereitgestellt. Über eine dritte Eingabe 62 werden dem Diagnosemodul 38 und somit auch der Überwachungseinheit 36 Informationen, hier Werte zu physikalischen Zustandsgrößen, bspw. momentane Werte für Strom, Spannung und/oder Temperatur, die sich für die Komponenten 28, 30, 32 während des Betriebs des Energiebordnetzes 25 ergeben, bereitgestellt. Weiterhin können durch die Eingabe 62 zusätzliche physikalischen Zustandsgrößen, bspw. momentane Strom-, Spannungs- und/oder Temperaturwerte, die an ausgewählten Stellen im Energiebordnetz 25 gemessen werden, dem Diagnosemodul 38 und damit auch der Überwachungseinheit 36 übermittelt werden.

Aufgrund der externen Belastbarkeitsmodelle sowie der Belastungsdaten werden von dem Prognosemodul 40 Belastbarkeitsmodelle 64 der Komponenten 28, 30, 32 erzeugt und im Prognosemodul 40 hinterlegt. Außerdem werden aus den Belastungsdaten der Komponenten 28, 30, 32 und den Belastbarkeitsmodellen 64 Zuverlässigkeitskenngrößen der Komponenten 28, 30, 32 ermittelt, z. B. eine momentane Ausfallwahrscheinlichkeit einer Komponente 28, 30, 32 aufgrund von Alterung und/oder Verschleiß. Weitere Belastbarkeitsmodell von anderen Herstellern können über die Schnittstelle 56 bereitgestellt werden. Ausgehend hiervon wird eine Wahrscheinlichkeit 66 eines Fehlers einer Komponente 28, 30, 32 aufgrund von Verschleiß berechnet. Weiterhin wird eine zweite Wahrscheinlichkeit 68 für einen unsicheren Zustand des gesamten Energiebordnetzes 25 berechnet, wobei Aspekte 70 berücksichtigt werden, die einen Betriebsmodus des Kraftfahrzeugs, eine Ausfallursache und eine Topologie des Energiebordnetzes 25 betreffen. Auf Basis der Zuverlässigkeitskenngrößen der Komponenten 28, 30, 32 wird für die weiteren Aspekte 70 und somit für jeden Betriebsmodus und jede mögliche Ausfallursache mindestens eine Zuverlässigkeitskenngröße des Energiebordnetzes 25 berechnet. Mit den weiteren Aspekten 70 wird ebenso eine Topologie der im Kraftfahrzeug verbauten Komponenten 28, 30, 32, die einen Einfluss auf die mindestens eine Zuverlässigkeitskenngröße des Energiebordnetzes 25 hat, ermittelt. Werte für die ermittelten Wahrscheinlichkeiten 66, 68 werden bei einem Vergleich 74 mit jeweiligen Grenzwerten 72 verglichen, wobei ein Risiko für einen Ausfall des Energiebordnetzes 25 ermittelt wird. Zusätzlich sind Aussagen über bevorstehende Wechsel von Komponenten 28, 30, 32 möglich, die im Idealfall im Rahmen eines regelmäßigen Werkstattbesuchs durchgeführt werden können.

Von dem Diagnosemodul 38 werden bei einer Überprüfung 76 Zustände der Komponenten 28, 30, 32 auf Basis der Diagnose der Komponenten 28, 30, 32, die über die Eingabe 60 übertragen wurden, überprüft. Ausgehend hiervon wird eine Systemdiagnose 78 durchgeführt, mit der eine Plausibilisierung der Diagnosen der Komponenten 28, 30, 32 und eine Erkennung unerkannter Fehler dieser Komponenten 28, 30, 32 möglich ist. Durch die über die Eingabe 62 übermittelten Werte von physikalischen Zustandsgrößen der Komponenten 28, 30, 32 und den optional ausgewählten physikalischen Zustandsgrößen im Energiebordnetz 25 wird eine Systemdiagnose 78 durchgeführt, mit der eine Plausibilisierung der Zustände der Komponenten 28, 30, 32 und eine Erkennung unerkannter Fehler im Energiebordnetz 25 möglich ist. Außerdem ist eine Identifikation der fehlerhaften Komponenten 28, 30, 32 möglich. Abschließend wird eine Meldung 80 über einen aktuellen Ist-Zustand des Energiebordnetzes 25 bereitgestellt, wobei dieser Ist-Zustand durch Überlagerung der Diagnose der Komponenten 28, 30, 32 sowie der Systemdiagnose 78 des Energiebordnetzes 25 ermittelt wird.

Mit der Überwachungseinheit 36 werden Berechnungen 82 durchgeführt. Außerdem sind in der Überwachungseinheit 36 Belastbarkeitsmodelle 84 für die Komponenten 28, 30, 32 sowie das Energiebordnetz 25 gespeichert oder können über eine Schnittstelle 56 zugeführt werden.

Bei Durchführung des Verfahrens ergibt sich ein erster Nutzen 86 für die Systemebene 34 und somit für eine Ebene des Energiebordnetzes 25, der eine Einflussnahme auf ein Lastmanagement zur Schonung der Komponenten 28, 30, 32 durch Kommunikation mit dem Energiemanagement 44 umfasst. Ein zweiter Nutzen 88 ist hier für die Kraftfahrzeugebene 45 vorgesehen. Dieser umfasst eine Unterstützung für eine Freigabe und/oder eine Freigabeentscheidung für automatisierte Fahrfunktionen, eine Zuverlässigkeitserhöhung durch adaptierte Fahrstrategien, eine Verfügbarkeitserhöhung, einen Sicherheitsgewinn bei einer Übergabe von einem automatisierten Fahrbetrieb in einen manuellen Fahrbetrieb sowie eine Notwendigkeit, das Kraftfahrzeug auch bei einem Ausfall von Komponenten 28, 30, 32 ohne Eingriff des Fahrers bei automatisiertem Fahrbetrieb in einen sicheren Zustand zu bringen.

Ein dritter Nutzen 90 ist hier für zukünftige Entwicklungen vorgesehen. Dieser umfasst eine Verbesserung von Belastbarkeitsmodellen 84 aufgrund einer großen Anzahl an Komponenten 28, 30, 32 sowie eine Verbesserung der Belastbarkeitsmodelle 84 aufgrund bekannter, realer Belastungen der Komponenten 28, 30, 32.

Bei Durchführung der Ausführungsformen des Verfahrens werden mit der Überwachungseinheit 36 aus Sicht einer Produktsicherheit Schritte zur Überwachung des Energiebordnetzes 25 durchgeführt, wobei eine integrative Betrachtung einer funktionalen Sicherheit sowie einer Zuverlässigkeit der Komponenten 28, 30, 32 sowie des Energiebordnetzes 25 umgesetzt wird. Dabei ist vorgesehen, dass die mindestens eine Komponente 28, 30, 32, bei der es sich in diesem Beispiel um eine Energiequelle, bspw. den Generator 10 (Figur 1), einen elektrischen Speicher, bspw. Batterie 14, 20, den Gleichstromwandler 8 (Figur 1), einen Energieverteiler oder um einen Verbraucher 16, 18, 22 (Figur 1) handelt, Werte von physikalischen Betriebsgrößen als Kenngrößen an die Überwachungseinheit 36 übermittelt, aus denen als Zustandsanalyse eine Diagnose der mindestens einen Komponente 28, 30, 32 abgeleitet wird. Auf Grundlage dessen wird einerseits eine physikalische Plausibilisierung der Diagnosen der Komponenten 28, 30, 32 durchgeführt, die ebenfalls an die Überwachungseinheit 36 übermittelt werden und andererseits eine Zuverlässigkeit der Komponenten 28, 30, 32 sowie des Energiebordnetzes 25 prognostiziert. Die hierbei ermittelten Betriebsgrößen sind von den im Kraftfahrzeug möglichen Betriebsmodi, von Ausfallursachen, von der eingesetzten Topologie des Energiebordnetzes 25, von einer Betriebsdauer der Komponenten 28, 30, 32 sowie deren aktueller Auslastung, von der an Klemmen der Komponenten 28, 30, 32 anliegenden Spannung sowie von dem durch die Komponenten 28, 30, 32 fließenden Strom und ggf. von weiteren physikalischen Zustandsgrößen, wie z. B. der Temperatur oder einem Ladezustand einer Batterie 14, 20 der Komponenten 28, 30, 32, sowie von einem Status der Diagnose der Komponenten 28, 30, 32 abhängig.

Auf Grundlage der durchgeführten Berechnungen zu einem Zustand der Komponenten 28, 30, 32 sowie des Energiebordnetzes 25 übermittelt die Überwachungseinheit 36 eine Empfehlung an das Steuergerät 46, die besagt, ob eine automatisierte Fahrfunktion freigegeben werden darf oder unterbunden werden muss. Alternativ übermittelt die Überwachungseinheit 36 Kenngrößen an das Steuergerät 46, die Aussagen über den Zustand der Komponenten 28, 30, 32 und/oder des gesamten Energiebordnetzes 25 und oder von Teilen dessen in Abhängigkeit vom Betriebsmodus umfassen. Zusätzlich zu diesen Kenngrößen können Kenngrößen, die Wechsel von Komponenten 28, 30, 32 anzeigen oder eine zulässige Freigabezeit der verschiedenen Betriebsmodi beinhalten, berücksichtigt werden. Dabei umfasst die Überwachungseinheit 36 zwei Module, nämlich das Diagnosemodul 38 und das Prognosemodul 40, wobei die Überwachungseinheit 36 in diese Module unterteilt ist.

Anhand der Werte der physikalischen Betriebsgrößen als Zustandsgrößen der Komponenten 28, 30, 32 und ggf. weiterer physikalischer Zustandsgrößen, die an bestimmten Stellen im Energiebordnetz 25 gemessen werden, wird das Energiebordnetz 25 mit dem Diagnosemodul 38 auf das Vorliegen von Fehlern überprüft. Dabei werden die Werte der Betriebsgrößen gegenseitig plausibilisiert und zur Durchführung geräteinterner Diagnosen und zur Bereitstellung von Meldungen über den aktuellen Zustand ausgewertet. Hierbei werden auch Informationen über eine Topologie des Energiebordnetzes 2, 25 inklusive der Komponenten 28, 30, 32 und deren Konfiguration berücksichtigt. Außerdem wird ein jeweils aktuell aktiver Betriebsmodus des Kraftfahrzeugs und somit auch des Energiebordnetzes 2, 25 berücksichtigt. Hierbei ist es möglich, einzelne, z. B. momentan aktive Betriebsmodi zu überwachen, ergänzend kann auch überprüft werden, ob andere Betriebsmodi in einem aktuellen Zustand funktionieren. Falls das Kraftfahrzeug aktuell in einem manuellen Fahrbetrieb betrieben wird und der Fahrer in den automatisierten Fahrmodus wechseln möchte, wird überprüft, ob das Energiebordnetz 2, 25 soweit in Ordnung ist, dass der automatisierte Fahrbetrieb freigegeben werden darf. Hierbei ist ein Betriebsmodus bspw. als Start-Stopp-Phase, als Normalfahrt 48, als Rekuperation 50 oder als Segelbetrieb 52 mit ausgeschaltetem Verbrennungsmotor ausgebildet. Aus Informationen über den jeweiligen Betriebsmodus kann der Zustand des Energiebordnetzes 2, 25 ermittelt werden. Abhängig von einem jeweiligen Betriebsmodus ergeben sich im Energiebordnetz 2, 25 unterschiedliche Strukturen, da bestimmte Komponenten 28, 30, 32 nicht aktiv sind, bspw. der Generator 12 beim Segelbetrieb 52, wodurch in der Topologie strukturelle Unterschiede entstehen, die ebenfalls berücksichtigt werden müssen und ggf. andere Ausfallmechanismen bewirken.

Wird für das Kraftfahrzeug bspw. der Segelbetrieb 52 mit ausgeschaltetem Motor durchgeführt, ist bei einem ersten Beispiel vorgesehen, dass mindestens eine Batterie 14, 20 (Figur 1) als Komponente 28, 30, 32 innerhalb einer bestimmten Grenze entladen wird, da der Generator 12 (Figur 1) als weitere Komponente 28, 30, 32 durch den Verbrennungsmotor nicht angetrieben wird. Allerdings ist eine sich dabei ergebende negative Ladebilanz der mindestens einen Batterie 14, 20 (Figur 1) in Ordnung.

Bei einem zweiten Beispiel ist vorgesehen, dass der Generator 12 (Figur 1) einen fehlerfreien Betrieb mit mittlerer Auslastung meldet, wobei jedoch ein Energieinhalt der ersten Batterie 14 (Figur 1) kontinuierlich sinkt, was bspw. auf einen Fehler des Energiemanagements 44, einer Steuerung des Generators 12 (Figur 1) oder der ersten Batterie 14 (Figur 1) und/oder eines Batteriesensors dieser Batterie 14 hindeutet. Der anhand des zweiten Beispiels geschilderte Fehler kann nach dem Stand der Technik heute nicht erkannt werden, da jede der genannten Komponenten 28, 30, 34 für sich genommen einen fehlerfreien Betrieb meldet. Allerdings wird aus Betrachtung der Systemebene 34 bei Ausführungsformen des Verfahrens erkannt, dass eine Gesamtheit an Zustandsmeldungen, die einzeln für sich allein in Ordnung sind, auf einen Fehler und/oder eine Alterung hindeutet.

Wird im Rahmen des Verfahrens durch die Überwachungseinheit 36 ein sicherheitsrelevanter Fehler und/oder eine sicherheitsrelevante Alterung erkannt, die ein potentielles Sicherheitsziel verletzen, ist vorgesehen dass ein Übergang in eine automatisierte Fahrfunktion und/oder einen Betriebsmodus, z. B. den Segelbetrieb 52 oder die Rekuperation 50, bei einem automatisierten Fahren nicht freigegeben wird. Falls sich das Kraftfahrzeug in einem manuellen Fahrbetrieb befindet und in den Segelbetrieb 52 gewechselt werden soll, aber die Batterie 14, 20 zu wenig Energie zum erneuten Start eines Motors aufweist, darf das Kraftahrzeug nicht in den Segelbetrieb 52 wechseln. Alternativ hierzu ist es möglich, dass Informationen über Fehler und/oder die Alterung hinsichtlich des Zustands des Energiebordnetzes 25 an das Steuergerät 46 übergeben werden, wobei eine Durchführung einer automatisierten Fahrfunktion unterbunden oder eine eventuell augenblicklich durchgeführte automatisierte Fahrfunktion bei einer nächsten Möglichkeit beendet wird.

Ergebnisse der Diagnose werden demnach zur Sperrung oder Freigabe von automatischen Fahrfunktionen verwendet, wobei ein digitaler Wert, bspw. eine null oder eins, an das Steuergerät 46 übermittelt wird, der besagt, ob eine jeweilige automatisierte Fahrfunktion nun gesperrt oder freigegeben ist. Es ist jedoch auch möglich, Informationen über den Zustand des Energiebordnetzes 25 durch eine Zustandsgröße bereitzustellen, die bspw. Werte zwischen 0% und 100% aufweisen kann und eventuell definierte Zwischenschritte aufweist. Auf Grundlage dessen kann mit dem Steuergerät 46 eine Aussage darüber getroffen werden, wie kritisch der Zustand des Energiebordnetzes 25 quantitativ ist, so dass eventuell gestufte Gegenmaßnahmen ergriffen werden können.

In einer alternativen oder ergänzenden Ausführungsform fragt das Steuergerät 46 von der Überwachungseinheit 36 bestimmte automatisierte Fahrfunktionen, bspw. einen Autobahnpilot, an. Auf Grundlage einer Historie bisheriger Werte von physikalischen Betriebsgrößen, die auch auf Modellen 84 beruht, ermittelt die Überwachungseinheit 36 Belastungen der Komponenten 28, 30, 32, die bei der jeweiligen Fahrfunktion zu erwarten sind. Auf Grundlage dessen kann eine jeweilige Fahrfunktion freigegeben oder verboten werden, sofern die zu erwartende Belastung zu hoch ist. Falls eine Fahrfunktion eine geringere Belastung verursacht, kann diese weiterhin ermöglicht und somit auch freigegeben werden.

Bei der vorgesehenen Ausführungsform des Verfahrens wird auch eine Prognose für einen zukünftigen Zustand mindestens einer Komponente 28, 30, 32 und/oder des Energiebordnetzes 25 bereitgestellt. Hierbei werden von den Komponenten 28, 30, 32 an das Prognosemodul 40 Belastungsdaten übermittelt. Auf Grundlage derartiger Belastungsdaten sowie von Belastbarkeitsmodellen der Komponenten 28, 30, 32 werden Zuverlässigkeitskenngrößen, wie z. B. Ausfallwahrscheinlichkeiten der Komponenten 28, 30, 32, ermittelt. Dabei sind die Belastbarkeitsmodelle in dem Prognosemodul 40 integriert. Über die Schnittstelle 56 ist es möglich, auch Belastbarkeitsmodelle von Komponenten anderer Hersteller zu implementieren.

Für jeden Betriebsmodus wird in dem Prognosemodul 40 die Wahrscheinlichkeit dafür berechnet, dass die Energieversorgung der sicherheitsrelevanten Komponenten 28, 30, 32 aufgrund von Verschleißeffekten eingeschränkt und/oder nicht verfügbar sein könnte. Dabei können in jedem Betriebsmodus mehrere Ausfallursachen Grund für die nicht ausreichend vorhandene Energieversorgung sein. Diese werden dementsprechend zuverlässigkeitstechnisch ermittelt. Beispiele dieser Ausfallursachen sind eine Überspannung oder eine Unterspannung an den sicherheitsrelevanten Komponenten 28, 30, 32, die jeweils in eigenen Zuverlässigkeitsmodellierungen berücksichtigt werden, da unterschiedliche zuverlässigkeitstechnische Kombinationen zum Ausfall der sicherheitsrelevanten Komponenten 28, 30, 32 führen. Folglich ist eine Berechnung der Wahrscheinlichkeiten von der Topologie des Energiebordnetzes 25, von den betrachteten Betriebsmodi und den Ausfallursachen abhängig. Um diese Wahrscheinlichkeit zu berechnen, wird für jeden Betriebsmodus, z. B. für ein automatisiertes Fahren, automatisiertes Fahren mit Segeln, automatisiertes Fahren mit Rekuperation, normales Fahren, usw., in Kombination mit jeder möglichen Ausfallursache ein Zuverlässigkeitsblockdiagramm, bspw. ein Fehlerbaum, ein Markov-Modell o. ä hinterlegt, das mit aktuell berechneten Ausfallraten der Komponenten 28, 30, 32 bedatet und berechnet wird. Das Zuverlässigkeitsblockdiagramm oder eine vergleichbare Methode zur Modellierung der Systemzuverlässigkeit stellt die Kritikalität eines Fehlers, einer Alterung und/oder eines Verschleißes der Komponenten 28, 30, 32 des gesamten Energiebordnetzes 25 bereit.

Bei der Modellierung des Zuverlässigkeitsblockdiagramms oder der alternativen Methode wird berücksichtigt, dass deren Aufbau nicht am elektrischen Schaltbild des Energiebordnetzes 25, sondern an einer Kombination der Fehler oder Alterung orientiert ist, die aufgrund der Ausfallursache zu einer Energieversorgung mit Werten für die Spannung führen, die geringer als ein vorgegebener Minimalwert oder größer als ein vorgegebener Maximalwert sind und außerhalb eines vorgegebenen Spannungsintervalls durch die sicherheitsrelevanten Verbraucher führen.

Im Rahmen der Ausführungsform des Verfahrens ist es im Fall eines dritten Beispiels möglich, dass der Gleichstromwandler 8 (Figur 1) als Komponente 28, 30, 32 des Energiebordnetzes 25 ausfällt, wobei es sich um einen kritischen Zustand handelt, da bedingt durch den Ausfall des Gleichstromwandlers 8 zwangsweise die Batterie 20 entladen wird, was zu einer Unterspannung im zweiten Kanal 6 als Ausfallursache führt. Dieser Ausfall wird durch Modellierung einer Zuverlässigkeit berücksichtigt.

Bei einem vierten Beispiel ist vorgesehen, dass die erste Batterie 14 (Figur 1) im ersten Kanal 4 (Figur 1) ausfällt. Falls für das Kraftfahrzeug zusätzlich noch der Segelbetrieb 52 als Fahrfunktion eingestellt wird, bei dem der Generator 12 (Figur 1) abgestellt wird und somit eine geringere Menge an elektrischer Energie erzeugt wird, kann daraus eine Unterspannung als Ausfallursache resultieren. Auch dies wird in dem Zuverlässigkeitsblockdiagramm berücksichtigt. Die dabei ermittelten bedingten Wahrscheinlichkeiten 74 werden mit Grenzwerten 72 verglichen. Dabei wird durch die systemische Diagnose des Ist-Zustands des Energiebordnetzes 25 eine sicherheitskritische Fahrfunktion nur dann freigeschaltet, wenn der Ist-Zustand des Energiebordnetzes 25 in Ordnung ist. Dabei kann auch die bedingte Wahrscheinlichkeit ermittelt werden, die eine Wahrscheinlichkeit eines sicherheitskritischen Zustands des Energiebordnetzes 25 unter Annahme eines funktionsfähigen Ist-Zustands umfasst. In diesem Fall meldet die Überwachungseinheit 36 dem Steuergerät 46, welche Betriebsmodi bei Durchführung einer automatisierten Fahrfunktion freigegeben werden dürfen und welche nicht, wobei eine automatisierte Fahrfunktion auch vollständig verhindert und somit unterbunden werden kann.

Im Rahmen des Verfahrens können auch weitere optionale Maßnahmen zur Optimierung durchgeführt werden. Falls die Anordnung 24 als selbstlernendes System ausgebildet ist, ist es möglich, eine jeweilige Betriebsstrategie an ein Beanspruchungsverhalten anzupassen, wodurch die Komponenten 28, 30, 32 optimal genutzt werden können. Außerdem kann die Überwachungseinheit 36 mit der zentralen Einheit 54 Daten austauschen. Dadurch sind u. a. realistische Fahrprofile für zukünftige Entwicklungen und/oder Auslegungen von Energiebordnetzen 25 bereitstellbar. Außerdem kann durch Auswertung von Felddaten baugleicher Komponenten einer Vielzahl von Kraftfahrzeugen Belastbarkeitsmodelle verbessert werden. Es ist ebenfalls möglich, bereits vorhandene Belastbarkeitsmodelle anzupassen, d. h. zu ändern und/oder zu ergänzen. Weiterhin ist es möglich, mit der zentralen Einrichtung 54 automatisiert zu kommunizieren. Falls für eine Komponente 28, 30, 32 eine beschränkte Lebensdauer prognostiziert wird, ist es u. a. möglich, die jeweils betroffene Komponente 28, 30, 32 rechtzeitig auszutauschen. Es ist ebenfalls möglich, die Belastung unter Berücksichtigung eines Streckenprofils anhand von Navigationsdaten vorherzusagen.

Das in Figur 4a detailliert schematisch dargestellte Energiebordnetz 25 umfasst ebenfalls einen ersten Kanal 100 sowie einen zweiten Kanal 102, die durch einen Gleichstromwandler 101 als eine mögliche Komponente 28, 30, 32 (Figur 2) des Energiebordnetzes 25 verbunden sind. Der erste Kanal 100 umfasst als Komponenten 28, 30, 32 (Figur 2) einen Generator 104 und eine erste Batterie 106. Der zweite Kanal 102 umfasst als Komponenten 28, 30, 32 (Figur 2) eine zweite Batterie 108, einen Starter 110, einen ersten sicherheitsrelevanten Verbraucher 112 sowie einen zweiten nicht sicherheitsrelevanten Verbraucher 114. Weiterhin zeigt Figur 4 einen ersten Massepotentialpunkt 116, einen zweiten Massepotentialpunkt 118, einen dritten Massepotentialpunkt 120, einen vierten Massepotentialpunkt 122, einen fünften Massepotentialpunkt 124 und einen sechsten Massepotentialpunkt 126 des Energiebordnetzes 25. Einige dieser genannten Komponenten 28, 30, 32, 100, 101, 102, 104, 106, 108, 110, 112, 114, 116, 118, 120, 122, 124, 126 des Energiebordnetzes 25 sind weiterhin in Flussdiagrammen der Figuren 4b, 4c, 4d schematisch gezeigt, wobei die Komponenten 28, 30, 32, 100, 101, 102, 104, 106, 108, 110, 112, 114, 116, 118, 120, 122, 124, 126 hierbei logisch in Reihe und/oder parallel geschaltet sind.

Bei der Ausführungsform des Verfahrens kann für das Energiebordnetz 25 und somit auch für dessen Komponente 28, 30, 32 (Figur 2) als Fahrfunktion und/oder Betriebsmodus die Normalfahrt 48, die Rekuperation 50 sowie der Segelbetrieb 52 durchgeführt werden.

Bei Durchführung der Normalfahrt 48 (Figur 2) wird von dem Generator 104 mechanische Energie, die bei laufendem Motor des Kraftfahrzeugs entsteht, in elektrische Energie gewandelt, die beiden Batterien 106, 108 bereitgestellt wird, wobei diese geladen werden. Außerdem wird dem sicherheitsrelevanten Verbraucher 112 und dem nicht sicherheitsrelevanten Verbraucher 114 in der Normalfahrt 48 ebenfalls Energie bereitgestellt. Wie hierzu das Flussdiagramm aus Figur 4b zeigt, wird elektrische Energie ausgehend von mindestens einem Massepotentialpunkt 116, 118, 120, von dem Generator 104 oder der ersten Batterie 106, über den ersten Kanal 100, den Gleichstromwandler 101, den zweiten Kanal 102 zu dem sicherheitsrelevanten Verbraucher 112 und dem Massepotentialpunkt 124 transportiert.

Bei der Rekuperation 50 ist vorgesehen, dass die mechanische Energie aus einer Bewegung des Kraftfahrzeugs von dem Generator 104 in elektrische Energie umgewandelt wird, die hier ebenfalls den beiden Batterien 106, 108 sowie dem sicherheitsrelevanten Verbraucher 112 und dem nicht sicherheitsrelevanten Verbraucher bereitgestellt wird. Das Flussdiagramm aus Figur 4c zeigt hierzu, dass elektrische Energie mindestens ausgehend von dem Massepotentialpunkt 120, von dem Generator 104 über den ersten Kanal 100, den Gleichstromwandler 101, den zweiten Kanal 102 zu dem sicherheitsrelevanten Verbraucher 112 und dem Massepotentialpunkt 124 transportiert wird.

Bei dem Segelbetrieb 52 (Figur 2) ist dagegen vorgesehen, dass der Generator 104 deaktiviert ist. Elektrische Energie zum Versorgen des sicherheitsrelevanten Verbrauchers 112 wird diesem im Segelbetrieb 52 (Figur 2) aus den beiden Batterien 106, 108 bereitgestellt. Anhand der genannten Betriebsmodi wird beispielhaft gezeigt, weshalb für jeden Betriebsmodus zur Zustandsanalyse unterschiedliche Modelle des Energiebordnetzes 25 herangezogen werden. Hierzu zeigt das Flussdiagramm aus Figur 4c, dass elektrische Energie ausgehend von mindestens einem Massepotentialpunkt 116, 120, von der ersten Batterie 106, über den ersten Kanal 100, den Gleichstromwandler 101, den zweiten Kanal 102 zu dem sicherheitsrelevanten Verbraucher 112 und dem Massepotentialpunkt 124 transportiert wird.

Das Verfahren zur Zustandsanalyse und somit zur Diagnose des aktuellen Zustands und/oder zur Prognose des zukünftigen Zustands ist für sämtliche Komponente 28, 30, 32 des Energiebordnetzes 2, 25 durchführbar, die zur Bereitstellung elektrischer Energie ausgebildet sind. Somit ist es möglich, sicherheitsrelevante Verbraucher 112 innerhalb eines vorgegebenen Intervalls für Werte der mindestens einen physikalischen, hier der mindestens einen elektrischen Betriebsgröße mit elektrischer Energie zu versorgen. Dabei ist dieses Intervall durch einen minimalen Wert und somit eine obere Grenze sowie einen maximalen Wert und somit eine untere Grenze festgelegt. Dies betrifft jeweils eine obere und eine untere Grenze für eine Spannung und/oder einen Strom als physikalische Betriebsgröße. Dabei können derartige Grenzen und/oder nicht sicherheitsrelevante Verbraucher 114 bei der jeweiligen Zustandsanalyse bei Bedarf optional berücksichtigt werden.

Im Rahmen der als Diagnose ausgebildeten Zustandsanalyse wird eine Diagnose mindestens einer Komponente 28, 30, 32 durch eine Diagnose sämtlicher Komponenten 28, 30, 32 und somit des gesamten Energiebordnetzes 25 als System plausibilisiert, wobei bisher nicht entdeckte Fehler einzelner Komponenten 28, 30, 32 erkannt werden können, da die Komponenten 28, 30, 32 nicht individuell sondern systemübergreifend diagnostiziert werden, wobei eine gegenseitige Wechselwirkung der Komponenten 28, 30, 32 berücksichtigt werden kann. Demnach wird die Diagnose auf der Komponentenebene 26 durch die Diagnose auf der Systemebene 34 plausibilisiert. So ist es in Ausgestaltung möglich, dass eine einzelne fehlerhafte Komponente 28, 30, 32 bei Durchführung einer individuellen Diagnose möglicherweise nicht als fehlerhaft identifiziert werden kann, wohingegen eine Auswirkung dieser fehlerhaften Komponente 28, 30, 32 auf mindestens eine weitere Komponente 28, 30, 32 bei der systemübergreifenden Diagnose erkannt werden kann.

Weiterhin werden Ergebnisse einzelner Diagnosen, wobei für jede Komponente 28, 30, 32 eine Diagnose auf der Komponentenebene 26 individuell durchgeführt wird, in der Überwachungseinheit 36 zentral zusammengefasst. Bei der Diagnose auf der Systemebene 34 werden als Kenngrößen der Komponenten 28, 30, 32 zumindest die mindestens eine physikalische Betriebsgröße und ggf. Kenngrößen, ebenfalls zumindest die mindestens eine physikalische Betriebsgröße des gesamten Energiebordnetzes 25 ermittelt und/oder gemessen.

Im Rahmen der als Prognose ausgebildeten Zustandsanalyse werden für die mindestens eine Komponente 28, 30, 32 betriebsbegleitend belastungsrelevante Kenngrößen, u. a. belastungsrelevante physikalische Betriebsgrößen, erfasst sowie gespeichert und somit in einen Speicher der Überwachungseinheit 36, der zum Speichern von Daten ausgebildet ist, mitgeschrieben. Die erfassten Werte werden auf ein definiertes Niveau der Belastung umgerechnet. Bei einer anschließenden Gegenüberstellung mit der Belastbarkeit der Komponenten 28, 30, 32 werden Ausfallwahrscheinlichkeiten der Komponenten 28, 30, 32 ermittelt. Daraus kann eine betriebsmodus- und/oder ausfallursachenabhängige Ausfallwahrscheinlichkeit des Energiebordnetzes 25, bspw. auch unter Berücksichtigung einer Topologie des Energiebordnetzes 25, berechnet werden, wobei mit der Topologie u. a. eine Anordnung der Komponenten 28, 30, 32 und deren Verbindungen untereinander und/oder deren Verteilung auf die Kanäle 100, 102 berücksichtigt werden kann bzw. können. Durch Extrapolation der bisherigen Belastung der Komponenten 28, 30, 32 kann eine Prognose auf der Komponentenebene 26 einzelner Komponenten 28, 30, 32, in der Regel mindestens einer Komponente 28, 30, 32, und auf der Systemebene 34 des gesamten Energiebordnetzes 25 und somit für sämtliche Komponenten 28, 30, 32 durchgeführt werden.

Außerdem kann die als Prognose ausgebildete Zustandsanalyse auf der Komponentenebene 26 für einzelne Komponenten 28, 30, 32 durch die Prognose des gesamten Energiebordnetzes 25 auf der Systemebene 34, wie im Fall der als Diagnose ausgebildeten Zustandsanalyse, plausibilisiert werden kann. Bei der Prognose als Zustandsanalyse werden die mitgeschriebenen Daten zu den belastungsrelevanten Kenngrößen verarbeitet und mit belastungsrelevanten Kenngrößen, u. a. belastungsrelevanten physikalischen Betriebsgrößen, erfasst sowie gespeichert und somit in einen Speicher der Überwachungseinheit 36, der zum Speichern von Daten ausgebildet ist, geschrieben. Diese Daten werden mit Belastbarkeitsmodellen der Komponenten 28, 30, 32 verglichen, woraus momentane Zuverlässigkeitskenngrößen ermittelt werden können. Hierbei ist es in Ausgestaltung ergänzend möglich, dass die Zuverlässigkeitskenngrößen durch Abbildung der Zuverlässigkeitsstruktur der Betriebsmodi in Abhängigkeit von relevanten Ausfallmechanismen ermittelt werden. Durch Extrapolation der bisherigen Belastung kann eine Zuverlässigkeitsprognose auf der Komponentenebene 26 und auf der Systemebene 34 durchgeführt werden, die gegenseitig plausibilisiert werden können. Aus der bisherigen Belastung und dem hinterlegten Belastbarkeitsmodell kann eine Prognose des zukünftigen Zustands durchgeführt werden.

In weiterer Ausgestaltung ist es möglich, mindestens eine als Diagnose ausgebildete Zustandsanalyse, d. h. eine Diagnose auf Systemebene 34 und/oder eine Diagnose auf Komponentenebene 26, durch mindestens eine als Prognose ausgebildete Zustandsanalyse, d. h. eine Prognose auf Systemebene 34 und/oder eine Prognose auf Komponentenebene 26, zu plausibilisieren und umgekehrt. Falls nun eine bspw. automatisierte Fahrfunktion aufgrund der mindestens einen Diagnose für den aktuellen Ist-Zustand der mindestens einen Komponente 28, 30, 32 durchgeführt werden könnte, kann dies aufgrund der mindestens einen Prognose für den zukünftigen Zustand der mindestens einen Komponente 28, 30, 32 unterbunden werden, da bei der mindestens einen Prognose in der Regel eine größere Anzahl an Werten für Betriebsgrößen als im Fall der mindestens einen Diagnose berücksichtigt wird.

Die Zustandsanalysen für die Diagnose und die Prognose können online und/oder während einem laufendem Betrieb des Energiebordnetzes 2, 25 und des Kraftfahrzeugs durchgeführt werden.

## Patentansprüche

1. Verfahren zum Betreiben eines Energiebordnetzes (2, 25) eines Kraftfahrzeugs, wobei das Energiebordnetz (2, 25) mehrere Komponenten (28, 30, 32) aufweist, wobei aus Werten zu einer Belastbarkeit mindestens einer Komponente (28, 30, 32) als Zustandsanalyse eine Prognose eines zukünftigen Zustands der mindestens einen Komponente (28, 30, 32) durchgeführt wird, wobei bislang erfasste Werte von physikalischen Betriebsgrößen der mindestens einen Komponente (28, 30, 32) des Energiebordnetzes (2, 25) gespeichert werden, woraus eine bisherige Belastung dieser mindestens einen Komponente (28, 30, 32) ermittelt wird, aus dem die Belastbarkeit der mindestens einen Komponente (28, 30, 32) ermittelt wird, **dadurch gekennzeichnet, dass** aus der Belastung und der Belastbarkeit mindestens eine Zuverlässigkeitskenngröße der mindestens einen Komponente (28, 30, 32) ermittelt wird, wobei über eine Freigabe mindestens einer Fahrfunktion des Kraftfahrzeugs, die von der mindestens einen Komponente (28, 30, 32) des Energiebordnetzes (2, 25) unterstützt wird, in Abhängigkeit eines Ergebnisses der durchgeführten Zustandsanalyse entschieden wird.

2. Verfahren nach Anspruch 1, bei dem über die Freigabe einer automatisierten Fahrfunktion des Kraftfahrzeugs entschieden wird.

3. Verfahren nach Anspruch 1 oder 2, das für mindestens eine Komponente (28, 30, 32) des Energiebordnetzes (2, 25) durchgeführt wird, die dazu ausgebildet ist, elektrische Energie bereitzustellen.

4. Verfahren nach einem der voranstehenden Ansprüche, bei dem unter Berücksichtigung der bisherigen Belastung ein Belastbarkeitsmodell für diese mindestens eine Komponente (28, 30, 32) ermittelt wird.

5. Verfahren nach Anspruch 4, bei dem aus dem Belastbarkeitsmodell die Zuverlässigkeitskenngröße für die mindestens eine Komponente (28, 30, 32) ermittelt wird.

6. Verfahren nach einem der voranstehenden Ansprüche, bei dem für die mindestens eine Komponente (28, 30, 32) des Energiebordnetzes (2, 25) als bisherige Belastung mindestens ein bisheriger Ausfall der mindestens einen Komponente (28, 30, 32), ein bisheriger Verschleiß der mindestens einen Komponente (28, 30, 32), eine Alterung der mindestens einen Komponente (28, 30, 32), ein Betriebsmodus der mindestens einen Komponente (28, 30, 32) und/oder eine Topologie des Energiebordnetzes (2, 25) berücksichtigt wird.

7. Verfahren nach einem der Ansprüche 4 bis 6, bei dem zum Ermitteln des Belastbarkeitsmodells für die mindestens eine Komponente (28, 30, 32) eine Belastung mindestens einer baugleichen Komponente, die außerhalb des Kraftfahrzeugs angeordnet ist, berücksichtigt wird.

8. Verfahren nach einem der Ansprüche 6 oder 7, bei dem für mehrere Komponenten (28, 30, 32) jeweils eine Zuverlässigkeitsanalyse durchgeführt wird, wobei durch Abbilden einer Struktur des Energiebordnetzes (2, 25) aus seiner Topologie und unter Berücksichtigung einer Ursache den bisherigen Ausfall sowie von Betriebsmodi aus den für die Komponenten (28, 30, 32) durchgeführten Zuverlässigkeitsanalysen für mindestens einen Teil, bspw. mindestens einen Kanal (6, 8, 100, 102), des gesamten Energiebordnetzes (2, 25) oder das komplette Energiebordnetz (2, 25) eine Zuverlässigkeitsanalyse durchgeführt wird, anhand der bspw. durch Vergleich einer Wahrscheinlichkeit für den bisherigen Ausfall mit einem Grenzwert (72), eine Entscheidung über die Freigabe getroffen wird.

9. Verfahren nach einem der voranstehenden Ansprüche, bei dem aus Werten von physikalischen Betriebsgrößen sämtlicher Komponenten (28, 30, 32) als eine erste Zustandsanalyse für sämtliche Komponenten des Energiebordnetzes (2, 25) eine Diagnose eines Ist-Zustands durchgeführt wird, wobei aus Werten von physikalischen Betriebsgrößen jeweils einer Komponente (28, 30, 32) als mindestens eine zweite Zustandsanalyse für jeweils eine Komponente (28, 30, 32) allein eine Diagnose eines Ist-Zustands durchgeführt wird, wobei die mindestens eine zweite Zustandsanalyse für jeweils eine Komponente (28, 30, 32) durch die erste Zustandsanalyse für sämtliche Komponenten (28, 30, 32) plausibilisiert wird.

10. Anordnung zum Betreiben eines Energiebordnetzes (2, 25) eines Kraftfahrzeugs, wobei das Energiebordnetz (2, 25) mehrere Komponenten (28, 30, 32) aufweist, wobei die Anordnung eine Überwachungseinheit (36) mit einem Prognosemodul (40) und einem Speicher aufweist, die dazu ausgebildet ist, aus Werten zu einer Belastbarkeit mindestens einer Komponente (28, 30, 32) als Zustandsanalyse eine Prognose eines zukünftigen Zustands der mindestens einen Komponente (28, 30, 32) durchzuführen, wobei der Speicher dazu ausgebildet ist, bislang erfasste Werte von physikalischen Betriebsgrößen der mindestens einen Komponente (28, 30, 32) des Energiebordnetzes (2, 25) zu speichern, woraus eine bisherige Belastung dieser mindestens einen Komponente (28, 30, 32) ermittelt wird, aus dem die Belastbarkeit der mindestens einen Komponente (28, 30, 32) ermittelt wird, adurch gekennzeichnet, dass aus der
Belastung und der Belastbarkeit mindestens eine Zuverlässigkeitskenngröße der mindestens einen Komponente (28, 30, 32) ermittelt wird, wobei die Überwachungseinheit (36) dazu ausgebildet ist, über eine Freigabe mindestens einer Fahrfunktion des Kraftfahrzeugs, die von der mindestens einen Komponente (28, 30, 32) des Energiebordnetzes (2, 25) unterstützt wird, in Abhängigkeit eines Ergebnisses der durchgeführten Zustandsanalyse zu entscheiden.

11. Anordnung nach Anspruch 10, die ein Steuergerät (46) zur Durchführung der mindestens einen automatisierten Fahrfunktion aufweist, wobei die Überwachungseinheit (36) dazu ausgebildet ist, dem Steuergerät (46) eine Empfehlung darüber bereitzustellen, ob die mindestens eine automatisierte Fahrfunktion freigegeben werden darf oder zu unterbinden ist bzw. verlassen werden muss.

## Claims

1. Method for operating an on-board power system (2, 25) of a motor vehicle, wherein the on-board power system (2, 25) has a plurality of components (28, 30, 32), wherein a prediction of a future state of the at least one component (28, 30, 32) is made on the basis of values relating to the loading capacity of at least one component (28, 30, 32) as a state analysis, wherein previously acquired values of physical operating variables of the at least one component (28, 30, 32) of the on-board power system (2, 25) are stored, from which values previous loading of this at least one component (28, 30, 32) is determined and the loading capacity of the at least one component (28, 30, 32) is determined therefrom, **characterized in that** a reliability characteristic variable of the at least one component (28, 30, 32) is determined from the loading and the loading capacity, wherein a decision about the release of at least one driving function of the motor vehicle which is supported by the at least one component (28, 30, 32) of the on-board power system (2, 25) is made in accordance with a result of the state analysis which is carried out.

2. Method according to Claim 1, in which a decision about the release of an automated driving function of the motor vehicle is made.

3. Method according to Claim 1 or 2, which is carried out for at least one component (28, 30, 32) of the on-board power system (2, 25) which is designed to make available electrical energy.

4. Method according to one of the preceding claims, in which a loading capacity model for this at least one component (28, 30, 32) is determined by taking into account the previous loading.

5. Method according to Claim 4, in which the reliability characteristic variable for the at least one component (28, 30, 32) is determined from the loading capacity model.

6. Method according to one of the preceding claims, in which a previous failure of the at least one component (28, 30, 32), previous wear of the at least one component (28, 30, 32), ageing of the at least one component (28, 30, 32), an operating mode of the at least one component (28, 30, 32) and/or topology of the on-board power system (2, 25) are/is taken into account as previous loading for the at least one component (28, 30, 32) of the on-board power system (2, 25).

7. Method according to one of Claims 4 to 6, in which in order to determine the loading capacity model for the at least one component (28, 30, 32) loading of at least one structurally identical component, arranged outside the motor vehicle, is taken into account.

8. Method according to one of Claims 6 or 7, in which a reliability analysis is carried out for each of a plurality of components (28, 30, 32), wherein a reliability analysis is carried out by forming a structure of the on-board power system (2, 25) from which topology and taking into account a cause of the previous failure and of operating modes from the reliability analyses carried out for the components (28, 30, 32), for at least one part, for example at least one duct (6, 8, 100, 102), of the entire on-board power system (2, 25) or the entire on-board power system (2, 25), on the basis of which reliability analysis a decision about the release is made, for example by comparing a probability for the previous failure with a limiting value (72).

9. Method according to one of the preceding claims, in which a diagnosis of an actual state is carried out as a first state analysis for all the components of the on-board power system (2, 25), on the basis of values of physical operating variables of all the components (28, 30, 32), wherein at least a second state analysis for in each case one component (28, 30, 32), solely a diagnosis of an actual state, is carried out on the basis of values of physical operating variables of in each case one component (28, 30, 32), wherein the at least one second state analysis is plausibility-checked for in each case one component (28, 30, 32) by means of the first state analysis for all the components (28, 30, 32).

10. Arrangement for operating an on-board power system (2, 25) of a motor vehicle, wherein the on-board power system (2, 25) has a plurality of components (28, 30, 32), wherein the arrangement has a monitoring unit (36) with a prediction module (40) and a memory, which monitoring unit (36) is designed to carry out, as a state analysis, a prediction of a future state of the at least one component (28, 30, 32) on the basis of values relating to the loading capacity of at least one component, wherein the memory is designed to store previously acquired values of physical operating variables of the at least one component (28, 30, 32) of the on-board power system (2, 25), on the basis of which previous loading of this at least one component (28, 30, 32) is determined, from which the loading capacity of the at least one component (28, 30, 32) is determined, **characterized in that** at least one reliability characteristic variable of the at least one component (28, 30, 32) is determined from the loading and the loading capacity, wherein the monitoring unit (36) is designed to make a decision about a release of at least one driving function of the motor vehicle which is supported by the at least one component (28, 30, 32) of the on-board power system (2, 25), as a function of a result of the state analysis which has been carried out.

11. Arrangement according to Claim 10, which has a control unit (46) for carrying out the at least one automated driving function, wherein the monitoring unit (36) is designed to provide the control unit (46) with a recommendation as to whether the at least one automated driving function can be released or is to be prohibited or has to be exited.

## Revendications

1. Procédé pour faire fonctionner un réseau de bord électrique (2, 25) d'un véhicule à moteur, dans lequel le réseau de bord électrique (2, 25) comprend une pluralité de composants (28, 30, 32), dans lequel une prévision d'un état futur dudit au moins un composant (28, 30, 32) est effectuée à partir de valeurs relatives à une capacité de charge dudit au moins un composant (28, 30, 32) en tant qu'analyse d'état dans lequel des valeurs précédemment détectées de grandeurs de fonctionnement physiques dudit au moins un composant (28, 30, 32) du réseau de bord électrique (2, 25) sont stockées, à partir desquelles une charge précédente dudit au moins un composant (28, 30, 32) est déterminée, de laquelle est déduite la capacité de charge dudit au moins un composant (28, 30, 32),
**caractérisé en ce qu'**au moins une caractéristique de fiabilité dudit au moins un composant (28, 30, 32) est déterminée à partir de la charge et de la capacité de charge dans lequel une décision est prise en fonction d'un résultat de l'analyse d'état effectuée pour autoriser ou non au moins une fonction de conduite du véhicule à moteur, qui est prise en charge par ledit au moins un composant (28, 30, 32) du réseau de bord électrique (2, 25).

2. Procédé selon la revendication 1, dans lequel une décision est prise pour autoriser ou non une fonction de conduite automatisée du véhicule à moteur.

3. Procédé selon la revendication 1 ou 2, lequel est mis en œuvre pour au moins un composant (28, 30, 32), destiné à fournir de l'énergie électrique, du réseau de bord électrique (2, 25).

4. Procédé selon l'une des revendications précédentes, dans lequel un modèle de capacité de charge est déterminé pour ledit au moins un composant (28, 30, 32) en tenant compte de la charge précédente.

5. Procédé selon la revendication 4, dans lequel la grandeur caractéristique de fiabilité est déterminée pour ledit au moins un composant (28, 30, 32) à partir du modèle de capacité de charge.

6. Procédé selon l'une des revendications précédentes, dans lequel il est tenu compte, pour ledit au moins un composant (28, 30, 32) du réseau de bord électrique (2, 25), en tant que charge précédente, d'au moins une défaillance précédente dudit au moins un composant (28, 30, 32), d'une usure précédente dudit au moins un composant (28, 30, 32), d'un vieillissement dudit au moins un composant (28, 30, 32), d'un mode de fonctionnement dudit au moins un composante (28, 30, 32) et/ou d'une topologie du réseau de bord électrique (2, 25) .

7. Procédé selon l'une des revendications 4 à 6, dans lequel il est tenu compte d'une charge d'au moins un composant de structure identique qui est disposé à l'extérieur du véhicule à moteur pour déterminer le modèle de capacité de charge pour ledit au moins un composant (28, 30, 32).

8. Procédé selon l'une des revendications 6 ou 7, dans lequel une analyse de fiabilité est effectuée respectivement pour plusieurs composants (28, 30, 32), dans lequel une analyse de fiabilité est effectuée pour au moins une partie, par exemple au moins un canal (6, 8, 100, 102), de l'ensemble du réseau de bord électrique (2, 25) ou de la totalité du réseau de bord électrique (2, 25) en représentant une structure du réseau de bord électrique (2, 25) à partir de sa topologie et en tenant compte d'une cause de la défaillance précédente ainsi que de modes de fonctionnement à partir des analyses de fiabilité effectuées pour les composants (28, 30, 32), sur la base de laquelle une décision est prise, par exemple en comparant une probabilité de la défaillance précédente avec une valeur limite (72).

9. Procédé selon l'une des revendications précédentes, dans lequel un diagnostic d'un état réel est effectué à partir de valeurs de grandeurs de fonctionnement physiques de l'ensemble des composants (28, 30, 32) en tant que première analyse d'état pour l'ensemble des composants du réseau de bord électrique (2, 25), dans lequel une prévision d'un état réel est effectuée à partir de valeurs de grandeurs de fonctionnement physiques d'un composant (28, 30, 32) respectif en tant qu'au moins une seconde analyse d'état pour un composant (28, 30, 32) respectif seul, dans lequel la plausibilité de ladite au moins une seconde analyse d'état pour un composant (28, 30, 32) respectif est vérifiée par la première analyse d'état pour l'ensemble des composants (28, 30, 32).

10. Dispositif pour faire fonctionner un réseau de bord électrique (2, 25) d'un véhicule à moteur, dans lequel le réseau de bord électrique (2, 25) comprend une pluralité de composants (28, 30, 32), dans lequel le dispositif comprend une unité de surveillance (36) comportant un module de prévision (40) et une mémoire, laquelle unité de surveillance est conçue pour effectuer une prévision d'un état futur dudit au moins un composant (28, 30, 32) à partir de valeurs relatives à une capacité de charge dudit au moins un composant (28, 30, 32) en tant qu'analyse d'état, dans lequel la mémoire est conçue pour stocker des valeurs préalablement détectées de grandeurs de fonctionnement physiques dudit au moins un composant (28, 30, 32) du réseau de bord électrique (2, 25), à partir desquelles une charge précédente dudit au moins un composant (28, 30, 32) est déterminée, de laquelle est déduite la capacité de charge dudit au moins un composant (28, 30, 32),
**caractérisé en ce qu'**au moins une caractéristique de fiabilité dudit au moins un composant (28, 30, 32) est déterminée à partir de la charge et de la capacité de charge, dans lequel l'unité de surveillance (36) est conçue pour prendre une décision en fonction d'un résultat de l'analyse d'état effectuée pour autoriser ou non au moins une fonction de conduite du véhicule à moteur, qui est prise en charge par ledit au moins un composant (28, 30, 32) du réseau de bord électrique (2, 25).

11. Dispositif selon la revendication 10, qui comprend un appareil de commande (46) destiné à exécuter au moins une fonction de conduite automatisée, dans lequel l'unité de surveillance (36) est conçue pour fournir à l'appareil de commande (46) une recommandation indiquant si ladite au moins une fonction de conduite automatisée peut être autorisée ou doit être inhibée ou doit être quittée.
